# EUROPÄISCHE PATENTSCHRIFT

(11) **EP 1 111 985 B1**
(45) Veröffentlichungstag und Bekanntmachung des Hinweises auf die Patenterteilung: **29.09.2004**
(21) Anmeldenummer: 00951360.7
(22) Anmeldetag: 07.07.2000
(51) Int. Cl.: A01D 57/30

(54) **VORRICHTUNG ZUM ERNTEN VON LANDWIRTSCHAFTLICHEM HALMGUT**
DEVICE FOR HARVESTING AGRICULTURAL STALK CROPS
DISPOSITIF PERMETTANT DE MOISSONNER DES PRODUITS AGRICOLES DE TYPE PAILLE

(30) Priorität: 08.07.1999 DE 19931684
(43) Veröffentlichungstag der Anmeldung: 04.07.2001
(73) Patentinhaber: Maschinenfabrik Bernard Krone GmbH, 48480 Spelle (DE)
(72) Erfinder: KRONE, Bernard Dr. Ing. E.h., D-48480 Spelle (DE); HORSTMANN, Josef Dr. Ing., D-49479 Ibbenbüren (DE)
(74) Vertreter: Pott, Ulrich, Dipl.-Ing.
(86) Internationale Anmeldenummer: PCT/EP2000/006449
(87) Internationale Veröffentlichungsnummer: WO 2001/003494

(56) Entgegenhaltungen:
- EP-A- 0 764 399
- FR-A- 1 367 816
- FR-A- 1 439 552
- GB-A- 963 534
- GB-A- 1 516 305
- GB-A- 2 088 684
- US-A- 3 717 981
- US-A- 4 550 554

## Beschreibung

Die Erfindung bezieht sich auf eine Vorrichtung zum Mähen von landwirtschaftlichem Halmgut und zum Bilden eines seitlich von der Vorrichtung abzulegenden Schwades aus dem gemähtem Halmgut nach dem Oberbegriff des Anspruchs 1.

Eine derartige Vorrichtung dient dazu, in einem Arbeitsgang auf Wiesen oder Feldern gewachsenes Gras oder dergleichen Halmgut zu mähen, aufzubereiten und für Nachfolgegeräte möglichst große Schwaden aus Halmgut zu bilden oder zusammenzulegen.

Beispielsweise ein mit einer Aufnahmetrommel ausgerüsteter Häcksler als Nachfolgegerät, der auch zum Häckseln von Mais zur Vorbereitung für Silagefutter eingesetzt wird, ist in der Praxis für einen großen Durchsatz an Halmgut ausgelegt und benötigt für seine betriebliche Auslastung entsprechend große Portionen an Halmgut, d. h. große Schwaden. Diese können beispielsweise durch Zusammenlegen des Halmgutes von zwei Arbeitsflächen durch Fahrtrichtungswechsel (um 180°) eines Mähgeräts oder durch Zusammenlegen des Halmgutes von mehreren Vorrichtungen, die an einem Mähgerät gehaltert sind, erreicht werden.

Aus der GB 2 088 684 A ist eine gezogene, mit Lauf- und Stützrädern ausgerüstete Vorrichtung bekannt, bei der in einem Geräterahmen hintereinander ein Mähwerk in der Art eines Trommelmähwerkes, ein Aufbereiter mit einem umlaufenden Rotor und ein Querförderer aufgehängt sind. Der Rotor des Aufbereiters übergibt das aufbereitete Halmgut an den Querförderer, der eine an beiden Enden gelagerte Förderschnecke umfaßt, die quer zur Arbeitsrichtung der Vorrichtung ausgerichtet ist und einen Antrieb besitzt, der die Schneckengänge von oben nach vorne und unten umlaufen läßt. Die Förderschnecke ist von einem Mantelkörper umgeben, der endseitig an der Auswurfseite gekürzt ist, so daß der Innenkörper der Förderschnecke in dem eingekürzten Bereich des Mantelkörpers bis zur Lagerstelle in einem Kragarm frei liegt. Zum Aufbereiter hin gerichtet ist der Mantelkörper ebenfalls offen und besitzt unten ein tangential zur Förderschnecke in Arbeitsrichtung der Vorrichtung ausgerichtetes Bodenteil als untere Abdeckung der Förderschnecke. Der Nachteil dieser bekannten Ausführungsform einer Vorrichtung besteht darin, daß der von dem Aufbereiter, der beispielsweise mit einem Zinkenrotor bestückt sein kann, bei der Aufbereitung bereits beschleunigte Gutstrom aus Halmgut bei der Übergabe auf den Querförderer anschließend geradlinig gegen den Mantelkörper der Förderschnecke und gegen die dem Gutstrom entgegen drehende Förderschnecke geworfen und hier auf einem Wert "Null" abgebremst wird. Von der Förderschnecke des Querförderers muß das aufbereitete Erntegut dann erneut beschleunigt und quer gefördert werden. Ferner ist der Innenkörper der Förderschnecke von Lagerstelle zu Lagerstelle vom Querschnitt aus betrachtet durchgehend gleich ausgeführt, so daß der Auswurfbereich des Querförderers sehr eingeengt ist und hier deshalb ebenfalls eine Abbremsung des jetzt von der Förderschnecke erneut beschleunigten Ernteguts erfolgt. Eine derartige Unterbrechung bzw. Beeinträchtigung des fließenden Gutstromes führt zu einer unregelmäßigen Schwadablage. Alle dem Gutstrom entgegengerichteten Kräfte müssen als Verlust und zu Lasten der Motorleistung der Zug- und/oder Antriebsmaschine gewertet werden.

Aufgabe der Erfindung ist es deshalb, eine Vorrichtung der genannten Art derart zu verbessern, daß die dem Gutstrom aus Halmgut von einer Geräteeinheit der Vorrichtung einmal erteilte Beschleunigung auf der Wegstrecke bis zur Ablage im Schwad auf dem Erdboden des Feldes oder der Wiese annähernd erhalten bzw. so wenig wie möglich abgebremst wird.

Die Aufgabe wird durch einen Gegenstand mit den Merkmalen des Anspruchs 1 gelöst. Hinsichtlich weiterer vorteilhafter Ausgestaltungen der Erfindung wird auf die Ansprüche 2 bis 16 verwiesen.

Durch die erfindungsgemäße Vorrichtung ist eine Vergrößerung des Durchsatzes durch den Querförderer, verbunden mit einem weiten Auswurf, erreicht. Durch die haubenförmige Erweiterung ist ein Transportraum zwischen dem Mantelkörper und der Förderschnecke gebildet, so daß das auf die Förderschnecke treffende Halmgut nicht abgebremst werden muß, sondern in hohem Durchsatz weiterbefördert werden kann. Das Halmgut muß nicht die Achse der Förderschnecke vollständig umlaufen, sondern kann zwischen den oberen Flanken der Schnecke und der haubenförmigen Erweiterung schnell transportiert werden. Dadurch erhöht sich die Weiterbeförderungsgeschwindigkeit des Halmguts insgesamt, am Auswurfende ist die Wurfweite aufgrund der hohen Fördergeschwindigkeit vergrößert, so daß eine derartige Vorrichtung beispielsweise auch als seitlicher Bestandteil eines Mähgeräts Verwendung finden kann und den Schwad in den mittleren Bereich des Mähgeräts auswirft, wo er beispielsweise auf einen von einem frontseitigen Anbau des Mähgeräts vorgebildeten Schwad aufgelegt werden kann. Dadurch ist es möglich, sehr große und zueinander weit beabstandete Schwaden zu bilden.

Der Auswurf wird weiterhin verbessert, wenn der Mantelkörper in seinem rückwärtigen Bereich am Auswurfende eine Ausnehmung aufweist und wenn der Achskörper der Förderschnecke sich zu seinem am Auswurfende befindlichen Lagerende verjüngt, insbesondere konisch verjüngt.

Eine besonders gute Förderung des Halmgutstroms im Querförderer ergibt sich, wenn in den Übergangsbereichen des Mantelkörpers von dem trogartig ausgebildeten unteren zu dem haubenförmigen oberen Bereich zwischen dem Mantelkörper und dem Außenumfang der Förderschnecke eine Abstreif- und Führungsleiste vorgesehen ist. Dadurch kann der Anteil des Halmguts, der nicht die Achse der Förderschnecke umläuft, sondern im Transportraum zwischen dem oberen Bereich der Förderschnecke und der haubenförmigen Erweiterung mit hohem Durchsatz transportiert wird, deutlich vergrößert werden.

Insbesondere ist es weiterhin vorteilhaft, den Aufbereiter, beispielsweise einen Zinkenrotor, gleichsinnig mit der Förderschnecke drehen zu lassen, wobei der Halmgutstrom über Kopf an den Querförderer übergeben wird. Die Förderschnecke unterstützt schon durch die dem vorgeordneten Zinkenrotor gleichgerichtete Drehrichtung den Förderfluß und erteilt dem Halmgutstrom durch die Schneckenflanken und infolge der fortlaufenden Steigung eine zusätzliche Beschleunigung. Insbesondere trägt die Abstreif- und Führungsleiste im Übergangsbereich des Mantelkörpers vom unteren hinteren zum oberen haubenförmigen Bereich dazu bei, daß der Halmgutstrom nicht unter die Förderschnecke in den trogartigen Bereich gezogen werden kann. Die Förderung des Halmguts erfolgt größtenteils im oberen Bereich zwischen der Haube und dem Achskörper der Förderschnecke. Zudem wird durch die Abstreif- und Führungsleiste ein Wickelschutz für die Förderschnecke erreicht. Da der Mantelkörper des Querförderer und das Gehäuse des Aufbereiters, insbesondere eines Zinkenrotors, eine Einheit bilden, unterstützt der vom Zinkenförderer erzeugte Luftstrom die Förderung des Halmgutstroms, so daß dieser eine hohe Gesamtbeschleunigung erfährt, die das Halmgut bedeutend weiter als herkömmliche Querförderer neben der Vorrichtung oder innerhalb des Innenbereichs einer Fahrspur eines Mähgeräts ablegt.

Eine Querschnittsverkleinerung des Achskörpers der Förderschnecke, beispielsweise in einer Ausbildung als Kegel, unterstützt den Fördervorgang des Halmgutstroms, indem im Auswurfbereich mehr Freiraum mit weniger Hindernissen geschaffen wird. Je nach Art des aufzubereitenden Halmguts kann ein Schneckengang auf dem Kegelteil des Innenkörpers im Auswurfbereich eine gezielte Führung des Halmgutstroms unterstützen.

Weitere Vorteile und Einzelheiten ergeben sich aus einem nachfolgend beschriebenen und in der Zeichnung dargestellten Ausführungsbeispiel des Gegenstandes der Erfindung. In der Zeichnung zeigt:
- Fig. 1: ein schematisch dargestelltes Mähgerät in Draufsicht mit erfindungsgemäßen Vorrichtungen in einer Ausbildung als beidseitig angebrachten Arbeitsaggregaten im praktischen Einsatz beim Zusammenlegen mehrerer Schwaden aus Halmgut,
- Fig. 2: eine teilweise abgebrochene und vergrößerte Darstellung einer Vorrichtung in Draufsicht, wie sie in Fig. 1 an einem Mähgerät in Arbeitsrichtung gesehen als seitlich gehaltertes Arbeitsaggregat an der rechten Seite dargestellt ist,
- Fig. 3: eine Schnittdarstellung der Vorrichtung nach der Linie III-III in Fig. 2,
- Fig. 4: eine perspektivische Darstellung einer Vorrichtung ohne Mähwerk zur Darstellung der geschlossenen Einheit der Mantelkörper vom Zinkenrotor und vom Querförderer.

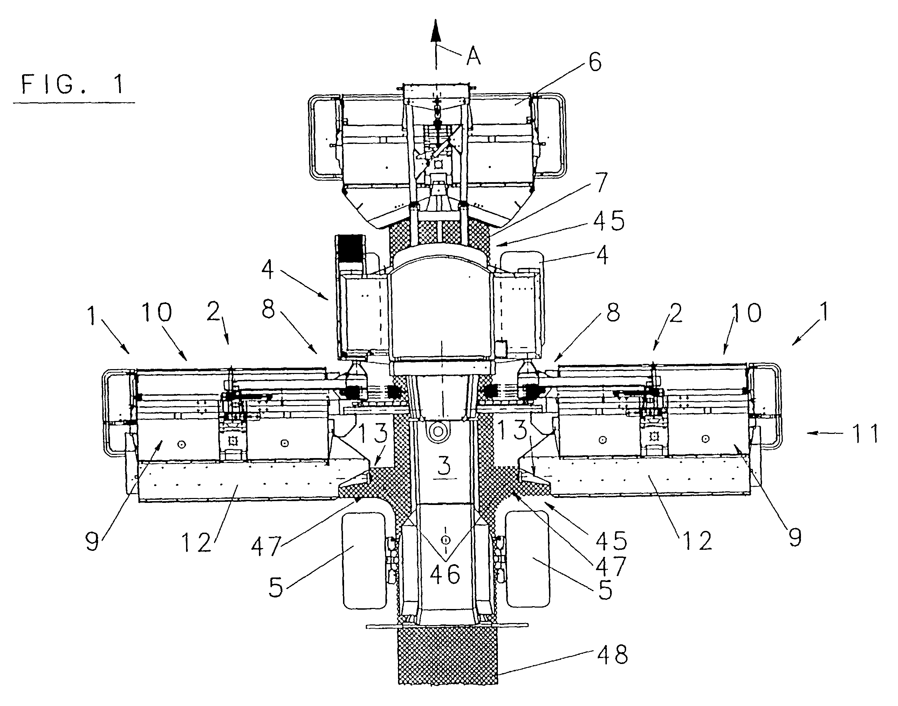

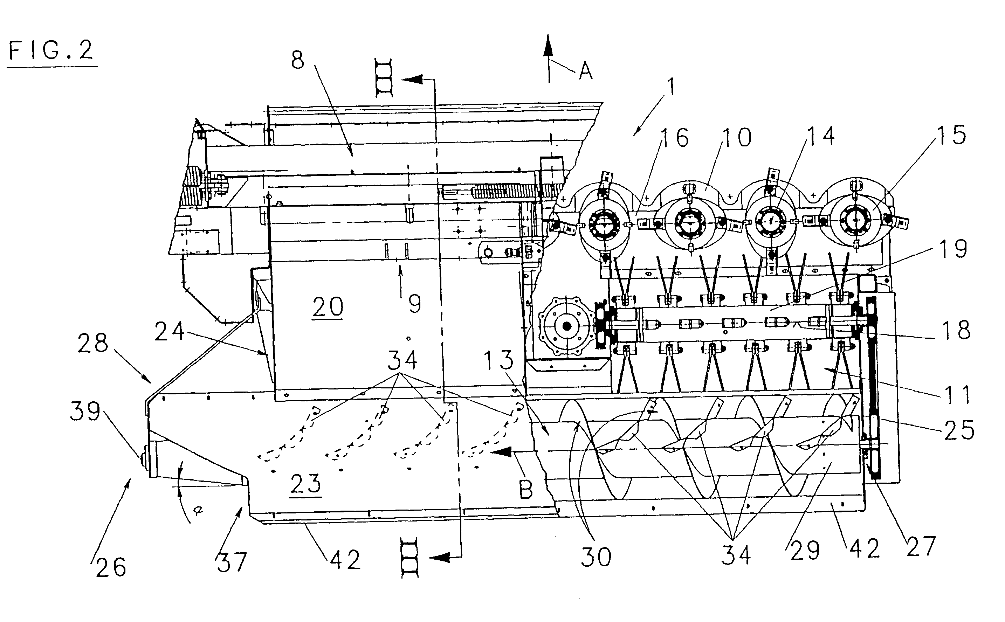

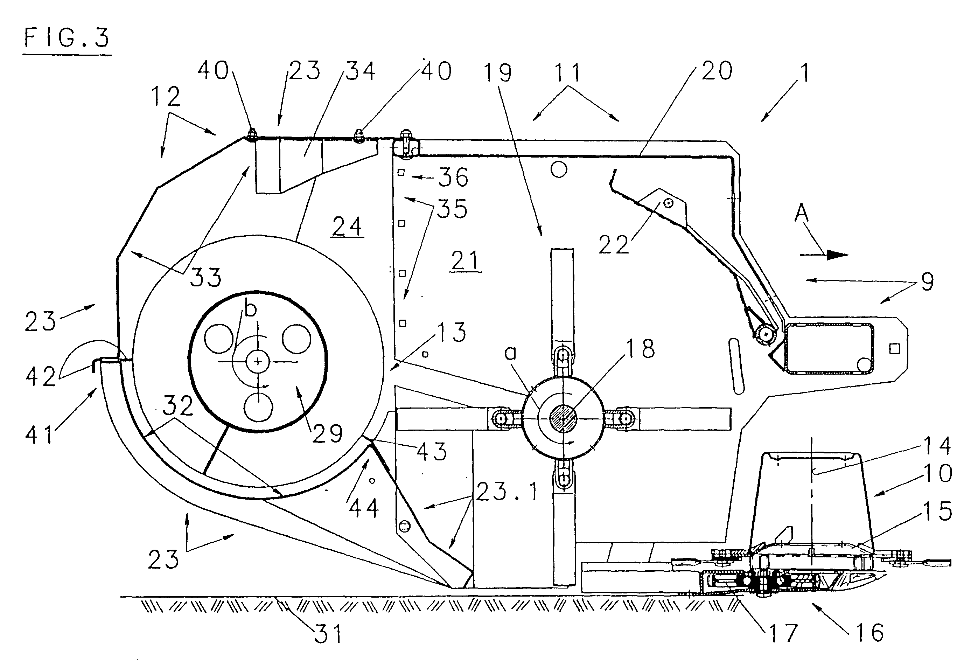

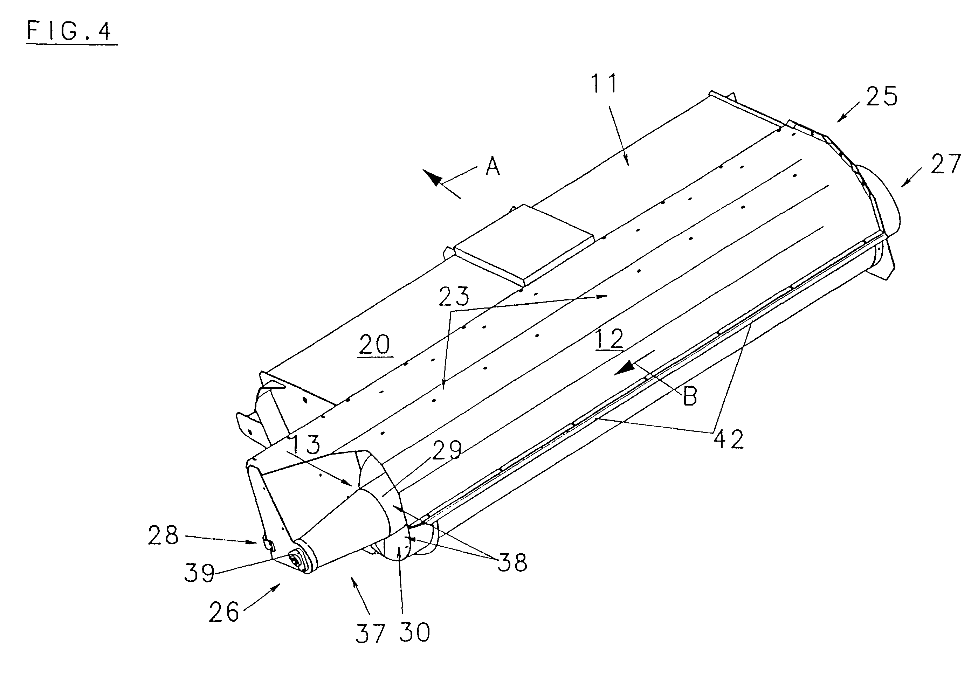

In den Figuren 1 bis 4 ist eine Vorrichtung 1 dargestellt, wie sie als Arbeitsaggregat 2 beidseitig an einem als selbstfahrenden Trägerfahrzeug ausgebildeten Mähgerät 3 zwischen den Vorder- und Hinterrädern 4,5 angeordnet sind. Hierbei ist die Vorrichtung 1 an der linken Seite des Trägerfahrzeuges 3 spiegelbildlich zu der Vorrichtung 1 an der rechten Seite ausgeführt. In ihrer Funktion sind beide Ausführungen gleich. Vor den Vorderrädern 4 ist im Frontanbau ein weiteres Arbeitsaggregat 6 angebracht, welches aus einer Mäheinrichtung und einem Aufbereiter in Kombination zusammengestellt ist. Dessen Schwadablage 7 erfolgt hinter dem Aufbereiter und zwischen den Vorderrädern 4 des Trägerfahrzeuges 3. Die beidseitig vom Trägerfahrzeug 3 angeordneten Vorrichtungen 1 sind über schwenkbar am Trägerfahrzeug 3 gehalterte Ausleger- und Tragarme 8 mit dem Trägerfahrzeug 3 verbunden und können so in an sich bekannter Weise aus einer in etwa horizontalen Arbeits- und Betriebsstellung in eine annähernd vertikale Transportstellung und zurück überführt werden. Über Antriebsmittel, die mit dem Ausleger- und Tragarm 8 gekoppelt sein können, erfolgt der Antrieb der Vorrichtung 1 vom Trägerfahrzeug 3 aus. Die Vorrichtung 1 selbst setzt sich nun aus einem in einem Geräterahmen nacheinander gehalterten Mähwerk 10, einem Aufbereiter 11 und einem Querförderer 12 mit einer Förderschnecke 13 zusammen. Das Mähwerk 10 ist beispielsweise als Scheibenmähwerk ausgebildet und hat um in etwa vertikale Rotationsachsen 14 rotierende und als Schneidelemente 15 ausgebildete Arbeitswerkzeuge. Die Schneidelemente 15 sind in einem unteren, den Antrieb aufnehmenden Holm 16 nebeneinander gelagert und werden vom Trägerfahrzeug 3 aus über im Holm 16 befindliche Stirnräder 17 angetrieben. In Arbeitsrichtung A gesehen hinter dem Mähwerk 10 befindet sich der Aufbereiter 11, der ebenfalls vom Geräterahmen 9 gehalten wird. Der Aufbereiter 11 besteht aus einem sich um eine horizontale Achse 18 in Pfeilrichtung a drehenden Zinkenrotor 19, der von einem Gehäuse 20, das von seitlichen Leitorganen 21 und von einem oberen, einstellbaren Leitorgan 22 umgeben ist. Dem Aufbereiter 11 ist wiederum der Querförderer 12 mit der Förderschnecke 13 nachgeordnet. Dieser ist mit einem Mantelkörper 23 mit dem Gehäuse 20 des Aufbereiters 11 mit nicht dargestellten lösbaren Verbindungen verbunden. Ebenfalls bilden die Seitenteile 24,25 des Querförderers 12 mit den Leitorganen 21 verlängerte Seitenteile der Vorrichtung 1. Die an beiden Enden 26,27 einmal in dem Seitenteil 25 und einmal an einem am Seitenteil 24 abgestützten Kragarm 28 gelagerte Förderschnecke 13 besteht nun aus einem Achskörper 29, auf dem die eigentlichen Schnecken mit ihren Schneckenflanken 30 beispielsweise durch eine Schweißverbindung befestigt sind. Die Schnecken sind auf dem Achskörper 29 so angebracht, daß die Förderschnecke 13 bei in Pfeilrichtung b gerichteter Drehrichtung das Halmgut in Förderrichtung B weiterleitet. Die Förderschnecke 13 ist nun, wie insbesondere Fig. 3 zeigt, von einem Mantelkörper 23 umgeben, der die Förderschnecke 13 zunächst in ihrem zum Erdboden gerichteten unteren Bereich 32 trogartig und in dichtem Abstand umgreift. Im hinteren und oberen Bereich 33 erweitert sich dann der Mantelkörper 23 haubenförmig gegenüber der Förderschnecke 13, so daß sich ein Transportraum zwischen dem Mantelkörper 23 und der Förderschnecke 13 für Halmgut ergibt und am Mantelkörper 23 aufrecht stehende Leitstege 34 zwischen dem Mantelkörper 23 und der Förderschnecke 13 mit Abstand voneinander gehaltert werden können. Die Leitstege 34 sind in der Fig. 2 von oben zu sehen. Im linken Teil der Fig. 2 sind sie als unsichtbar unter dem Mantelkörper dargestellt. Im rechten Teil der Fig. 2 ist der Mantelkörper 23 abgebrochen dargestellt, so daß die Leitstege 34 frei im Raum liegend sichtbar dargestellt erscheinen. Die Leitstege 34 können in der Draufsicht gesehen bogenförmig oder auch durch Abkantung aus mehreren aneinandergereihten Winkeln gebildet sein. In jedem Fall ist das in Fahrtrichtung vordere Ende eines Leitsteges 34 mit einem kleineren Winkel gegenüber der Fahrtrichtung angeordnet als das in Fahrtrichtung A hintere Ende. Das auftreffende Halmgut wird daher von nahezu parallel zu seiner Förderrichtung oder spitzwinklig hierzu stehenden Leitblechen aufgenommen und in deren Umlenkungswinkel mitgeführt, wodurch es in eine nahezu parallele Stellung zur Förderrichtung B der Förderschnecke 13 gelangt. Der Umlenkwinkel für das Halmgut über die Leitstege 34 soll etwa zwischen 70° und 90° liegen.

Der vordere obere Bereich 35 des Mantelkörpers 23 läßt eine Zuführ- und Übergabeöffnung 36 frei. Durch diese Zuführ- und Übergabeöffnung 36 gelangt das vom Zinkenrotor 19 des Aufbereiters 11 über Kopf geförderte Halmgut zum Querförderer 12. Die Größe bzw. die Länge der Zuführ- und Übergabeöffnung 36 in Querrichtung (entspricht der Förderrichtung B) des Querförderers 12 ist von der Ausführungsform des Aufbereiters abhängig. Der Mantelkörper 23 kann deshalb im oberen vorderen Bereich 35 auch noch teilweise geschlossen sein. Im Ausführungsbeispiel gemäß Fig. 2 und 3 ist der Querförderer 12 im Auswurfbereich 37 gegenüber dem Gehäuse 20 des Zinkenrotors 19 verlängert ausgeführt, und der Mantelkörper weist eine Auswurföffnung 38 auf oder ist teilweise gekürzt ausgeführt. Der Achskörper 29 der Förderschnecke 13 ist aber weiterhin bis zur Lagerstelle 39 geführt, jedoch in diesem Bereich ohne Schnecke ausgebildet. Damit der von dem Achskörper 29 eingenommene Raum für einen besseren Durchfluß eines Halmgutstromes verkleinert wird, ist dieser konisch oder kegelförmig am Ende gestaltet und erfährt somit eine Querschnittsverkleinerung in diesem Bereich. Der Winkel α, wie er in der Fig. 2 am Achskörper 29 dargestellt ist, sollte etwa 5° bis 15°, vorzugsweise 10° betragen. Die Leitstege 34 sind in der dargestellten Ausführungsform über Schrauben 40 mit dem Mantelkörper 23 befestigt. Es besteht jedoch auch die Möglichkeit, diese über nicht dargestellte Zusatzbohrungen im Mantelkörper 23 einstellbar auszuführen. Ebenfalls besteht die Möglichkeit, daß die Leitstege 34 einseitig schwenkbeweglich am Mantelkörper 23 angelenkt und anderseitig verstellbar in einer nicht dargestellten bogenförmigen Schlitzführung im Mantelkörper 23 verstell- und arretierbar ausgeführt sind. Hierdurch kann der Benutzer der Vorrichtung 1 je nach Art und Feuchtezustand des Halmgutes auf die Führung des Halmgutstromes einwirken. Schon allein die gleichgerichteten Drehrichtungen der Förderschnecke 13 und des Zinkenrotors 19 ergeben eine kontinuierliche Förderung des Halmgutstromes, da hierdurch eine Staubildung vermieden wird.

Indem etwa im Übergangsbereich 41 des Mantelkörpers 23 des Querförderers 12 vom unteren hinteren Bereich 32 zum oberen haubenförmigen Bereich 33 ein einstellbares Abstreif- und Führungselement 42 zwischen dem Mantelkörper 23 und der Förderschnecke 13 eingebracht wird, erreicht man, daß der Halmgutstrom (Halmgut) nicht unter die Förderschnecke in den trogartigen Bereich gezogen wird. Die Förderung des Halmgutes erfolgt aufgrund des vorhandenen Abstreif- und Führungselementes 42 größtenteils im oberen Bereich 33 zwischen der Haube und dem Innenkörper 29 der Förderschnecke 13. Das Abstreif- und Führungselement 42 dient gleichzeitig als Wickelschutz. Ein Wickelschutz wird auch durch ein weiteres Abstreif- und Führungselement 43 im vorderen unteren Übergangsbereich 44 erreicht. An den trogartig ausgeführten Bereich 32 des Mantelkörpers 23 kann sich auch bereits am Anfang der Zuführ- und Übergabeöffnung 36 ein zum Erdboden 31 gerichteter, die Umlaufbahn des Zinkenrotors tangierenden Führungskörper 23.1 als Leitvorrichtung für das Halmgut anschließen. Dieser Führungskörper 23.1 ist jedoch Bestandteil des Querförderers.

Die Vorrichtung 1 des Querförderers 12 kann auch derart ausgebildet sein, daß der Querförderer 12 über nicht dargestellte Verschlüsse aus der Vorrichtung 1 entfernt werden kann. Der Halmgutstrom aus Halmgut wird dann direkt in aufbereiteter Form auf dem Erdboden z. B. breitabgelegt. Ferner kann der Querförderer 12 auch, wie in der GB 2 088 684 A dargestellt, von dem Aufbereiter 11 weggeschwenkt oder verschiebbar ausgebildet sein. Der Querförderer 12 gelangt dann in eine Ruheposition, in der er einen Mäh- und Aufbereitungsablauf nicht mehr behindert.

Beim praktischen Einsatz gemäß Fig. 1 wird nun das von dem als Scheibenmähwerk ausgebildete Mähwerk 10 abgeschnittene Halmgut 45 von dem -Zinkenrotor 19 erfaßt und bei einer Überkopfförderung aufbereitet und beschleunigt und als Halmgutstrom 46 an den Querförderer 12 übergeben. Hierbei wird der Halmgutstrom 46 über die verteilt angeordneten Leitstege 34 gezielt umgelenkt und von der Förderschnecke 13 aufgrund ihres Umlaufes in Pfeilrichtung b, die auch der Umlaufrichtung des Zinkenrotors 19 entspricht, in Förderrichtung B größtenteils im hinteren und oberen Bereich 33 zur Auswurföffnung 38 gefördert. Hier verläßt der Halmgutstrom 46 beschleunigt den Querförderer 12 und wird als Schwad 47 innerhalb des Innenbereiches der Hinterräder 5 des Trägerfahrzeuges 3 abgelegt. Wie in Fig. 1 dargestellt ist, wird zunächst von dem vorderen Arbeitsaggregat 6 ein Schwad 7 zwischen den Vorderrädern 4 abgelegt, dem dann von den seitlich angeordneten und erfindungsmäßig ausgestatteten Vorrichtungen 1 jeweils ein weiteres Schwad 46 zugeführt und so ein Gesamtschwad 48 auf den Erdboden hinter dem Trägerfahrzeug 3 abgelegt wird. Das Gesamtschwad 48 beinhaltet nun Halmgut 45, was auf einer Gesamtbreite von ca. 10 Metern in einem Arbeitsgang geschnitten wurde, so daß auch Großhäcksler mit vorgeordneter Aufnahmetrommel entsprechend ausgelastet werden können.

Das Mähgerät kann im Einsatz einen Mittelschwad 48 während seiner Fahrt in eine Richtung ablegen und nach Wenden bei Fahrt in die andere Richtung einen parallel hierzu liegenden weiteren Schwad 48 aus dem während dieser Rückfahrt gemähten Halmgut bilden. Die beiden Schwaden 48 sind dann um die doppelte Breite eines seitlichen Auslegers voneinander beabstandet. Dadurch ergibt sich ein besonders günstiges Arbeitsverfahren mit großen, weit voneinander beabstandeten Schwaden.

## Patentansprüche

1. Vorrichtung (1) zum Mähen von landwirtschaftlichem Halmgut und zum Bilden eines seitlich der Vorrichtung (1) abzulegenden Schwades aus gemähtem Halmgut, wobei die Vorrichtung ein Mähwerk (10), einen Aufbereiter (11) und einen Querförderer (12) aufweist, der Querförderer (12) eine Förderschnecke (13) und einen die Förderschnecke (13) zumindest bereichsweise umgreifenden Mantelkörper (23) umfaßt und der in Förderrichtung der Förderschnecke liegende Endbereich des Querförderers (12) ein freies Auswurfende (37) für die Schwadablage des Halmgutes bildet, **dadurch gekennzeichnet, daß** die Förderschnecke (13) in einem unteren Bereich (32) in geringem Abstand trogartig von dem Mantelkörper (23) untergriffen und in einem oberen Bereich (33) von einer gegenüber der Radialerstreckung der Förderschnecke (13) haubenförmigen Erweiterung des Mantelkörpers (23) übergriffen ist, und zur Förderung des Halmgutes größtenteils im haubenförmig erweiterten Bereich (33) des Mantelkörpers (23) eine etwa im Bereich (41) des Übergangs vom trogartigen Bereich (32) zum haubenförmigen Bereich (33) des Mantelkörpers (23) zwischen der Förderschnecke (13) und dem Mantelkörper (23) angeordnete, einstellbare Abstreif- und Führungsleiste (42) vorgesehen ist.

2. Vorrichtung nach Anspruch 1, **dadurch gekennzeichnet, daß** in dem dem Aufbereiter zugewandten vorderen Bereich der Förderschnecke (13) zwischen dieser und dem Mantelkörper eine weitere Abstreif- und Führungsleiste (43) vorgesehen ist.

3. Vorrichtung nach Anspruch 1 oder 2, **dadurch gekennzeichnet, daß** im Bereich des Auswurfendes (37) der Mantelkörper (23) zumindest in dem bezüglich der Fahrtrichtung (A) rückwärtigen Bereich eine Ausnehmung (38) aufweist.

4. Vorrichtung nach einem der Ansprüche 1 bis 3, **dadurch gekennzeichnet, daß** die Förderschnecke (13) an ihren quer zur Fahrtrichtung (A) liegenden Endbereichen drehbar gelagert ist und der die Schneckengänge tragende Achskörper (29) am Auswurfende (37) eine Querschnittsverringerung aufweist.

5. Vorrichtung nach einem der Ansprüche 1 bis 4, **dadurch gekennzeichnet, daß** innerhalb der haubenförmigen Erweiterung (33) des Mantelkörpers (23) Leitstege (34) angeordnet sind.

6. Vorrichtung nach Anspruch 5, **dadurch gekennzeichnet, daß** in Förderrichtung (B) der Förderschnecke (13) nebeneinander mehrere Leitstege (34) angeordnet sind.

7. Vorrichtung nach Anspruch 6, **dadurch gekennzeichnet, daß** der in Fahrtrichtung (A) vordere Bereich eines jeweiligen Leitsteges (34) mit der Fahrtrichtung (A) einen kleineren Winkel, gemessen von der Fahrtrichtung (A) entgegen der Förderrichtung (B) der Förderschnecke (13), einschließt als der in Fahrtrichtung (A) hintere Bereich.

8. Vorrichtung nach Anspruch 7, **dadurch gekennzeichnet, daß** die Leitstege (34) den Halmgutstrom um etwa 70°-90° in Förderrichtung (B) der Förderschnecke (13) umlenken.

9. Vorrichtung nach einem der Ansprüche 5 bis 8, **dadurch gekennzeichnet, daß** die Leitstege (34) in ihrer Position einstellbar an dem Mantelkörper (23) gehaltert sind.

10. Vorrichtung nach einem der Ansprüche 5 bis 9, **dadurch gekennzeichnet, daß** die Leitstege (34) einseitig schwenkbeweglich am Mantelkörper (23) angelenkt sind, wobei das andere Ende in einer bogenförmigen, dem Mantelkörper (23) zugeordneten Führungskulisse verstell- und arretierbar ist.

11. Vorrichtung nach einem der Ansprüche 1 bis 10, **dadurch gekennzeichnet, daß** der Aufbereiter (11) parallelachsig zur Förderschnecke (13) gehalten ist und eine zu deren Drehrichtung (b) gleichgerichtete Drehrichtung (a) aufweist.

12. Vorrichtung nach Anspruch 11, **dadurch gekennzeichnet, daß** die Drehgeschwindigkeit der Förderschnecke (13) gegenüber der Drehgeschwindigkeit des Aufbereiters (11 ) vergrößert ist.

13. Vorrichtung nach einem der Ansprüche 1 bis 12, **dadurch gekennzeichnet, daß** die Querschnittsverkleinerung des Achskörper (29) der Förderschnecke (13) des Querförderers (12) am Auswurfende (37) des Halmgutes konisch oder kegelförmig gestaltet ist.

14. Vorrichtung nach Anspruch 13, **dadurch gekennzeichnet, daß** der Winkel a des konischen oder kegelförmigen Bereiches vom Achskörper (29) der Förderschnecke (13) 5° - 15°, vorzugsweise 10°, beträgt.

15. Vorrichtung nach einem der Ansprüche 1 bis 14, **dadurch gekennzeichnet, daß** der Querförderer (12) über zu lösende Verschlüsse aus der Vorrichtung (1) entfernbar ist.

16. Vorrichtung nach einem der Ansprüche 1 bis 15, **dadurch gekennzeichnet, daß** der Querförderer (12) in eine den Mäh- und Aufbereitungsablauf der Vorrichtung (1) nicht beeinträchtigende Ruheposition verschwenk- oder verschiebbar ist.

## Claims

1. Device (1) for reaping agricultural stalk crops and for forming a swath of reaped stalk crops to be deposited to the side of the device (1), wherein the device exhibits a cutter bar (10), a conditioner (11) and a transverse conveyor (12), which transverse conveyor (12) comprises a conveyor screw (13) and an enveloping body (23) which at least partially surrounds the conveyor screw (13), and wherein the end area of the transverse conveyor (12) lying in the direction of conveyance of the conveyor screw forms a free ejection end (37) for depositing the swath of stalk crops, **characterised in that** the enveloping body (23) extends in a lower area (32) in the manner of a trough undemeath the conveyor screw (13) for a short distance, **in that** the enveloping body (23), compared to the radial extension of the conveyor screw (13), is enlarged in an upper area (33) in the form of a hood, above the conveyor screw, and **in that** an adjustable wiper and guide plate (42), arranged between the conveyor screw (13) and the enveloping body (23), is provided for conveying the stalk crops for the most part in the area (33) of the enveloping body (23) that is extended in the form of a hood, in the approximate area (41) of the transition from the trough-shaped area (32) to the hood-shaped area (33) of the enveloping body (23).

2. Device according to claim 1, **characterised in that** a further wiper and guide plate (43) is provided in the front area of the conveyor screw (13) facing the conditioner, between the conveyor screw and the enveloping body.

3. Device according to claim 1 or 2, **characterised in that** in the area of the ejection end (37) the enveloping body (23) exhibits a recess (38) at least in the rear area relative to the direction of travel (A).

4. Device according to any one of claims 1 to 3, **characterised in that** the conveyor screw (13) is swivelled at its end areas transverse to the direction of travel (A), and **in that** the shaft body (29) carrying the screw threads exhibits a cross-sectional reduction at the ejection end (37).

5. Device according to any of claims 1 to 4, **characterised in that** guide stays (34) are arranged inside the hood-shaped extension (33) of the enveloping body (23).

6. Device according to claim 5, **characterised in that** several guide stays (23) are arranged adjacent to each other in the direction of conveyance (B) of the conveyor screw (13).

7. Device according to claim 6, **characterised in that** the front area of each guide stay (34), viewed in the direction of travel (A), forms a smaller angle with the direction of travel (A), measured from the direction of travel (A) against the direction of conveyance (B) of the conveyor screw (13), than the rear area viewed in the direction of travel (A).

8. Device according to daim 7, **characterised in that** the guide stays (34) deflect the stalk crop flow by approximately 70°-90° in the direction of conveyance (B) of the conveyor screw (13).

9. Device according to any one of claims 5 to 8, **characterised in that** the guide stays (34) are retained on the enveloping body (23) so that they are adjustable in their position.

10. Device according to any one of claims 5 to 9, **characterised in that** the guide stays (34) are articulated to the enveloping body (23) so that they can be swivelled on one side, wherein the other end is adjustable and lockable in an arc-shaped guide slot assigned to the enveloping body (23).

11. Device according to any one of claims 1 to 10, **characterised in that** the conditioner (11) is retained parallactically to the conveyor screw (13), and exhibits a direction of rotation (a) that is the same as the direction of rotation (b) of the conveyor screw.

12. Device according to claim 11, **characterised in that** the speed of rotation of the conveyor screw (13) is greater than the speed of rotation of the conditioner (11).

13. Device according to any one of claims 1 to 12, **characterised in that** the cross-sectional reduction of the shaft body (29) of the conveyor screw (13) of the transverse conveyor (12) is of conical or tapered design at the ejection end (37) of the stalk crops.

14. Device according to claim 13, **characterised in that** angle a of the conical or tapered area of the shaft body (29) of the conveyor screw (13) is 5° - 15°, preferably 10°.

15. Device according to any one of daims 1 to 14, **characterised in that** the transverse conveyor (12) can be removed from the device (1) by means of detachable locks.

16. Device according to any one of claims 1 to 15, **characterised in that** the transverse conveyor (12) can be swivelled or displaced into a position of rest that does not impair the reaping and conditioning process of the device (1).

## Revendications

1. Dispositif (1) pour faucher du chaume agricole et pour former un andain de chaume fauché à déposer sur le côté du dispositif (1), ledit dispositif présentant un mécanisme de fauche (10), un dispositif de traitement (11) et un transporteur transversal (12), ledit transporteur transversal (12) comportant une vis sans fin transporteuse (13) et un corps d'enveloppe (23) entourant au moins en partie la vis sans fin transporteuse (13) et la zone d'extrémité du transporteur transversal (12) située dans le sens de transport de la vis sans fin transporteuse (13) formant une extrémité libre d'éjection (37) pour la dépose de l'andain de chaume, **caractérisé en ce que** la vis sans fin transporteuse (13) est entourée dans une zone inférieure (32) à une faible distance par le corps d'enveloppe (23) en forme d'auge et dans une zone supérieure (33) par un élargissement du corps d'enveloppe (23) en forme de dôme par rapport à l'étendue radiale de la vis sans fin transporteuse (13) et **en ce qu'**une bordure de raclage et de guidage (42) réglable, disposée entre la vis sans fin transporteuse (13) et le corps d'enveloppe (23) à peu près dans la zone (41) de transition entre la zone en forme d'auge (32) et la zone en forme de dôme (33) du corps d'enveloppe (23), est prévue afin de transporter le chaume en majeure partie dans la zone (33) élargie en forme de dôme du corps d'enveloppe (23).

2. Dispositif selon la revendication 1, **caractérisé en ce qu'**une autre bordure de raclage et de guidage (43) est prévue dans la zone avant de la vis sans fin transporteuse (13) tournée vers le dispositif de traitement (11), entre ladite vis sans fin transporteuse (13) et le corps d'enveloppe (23).

3. Dispositif selon la revendication 1 ou 2, **caractérisé en ce que** dans la zone de l'extrémité d'éjection (37), le corps d'enveloppe (23) présente un évidement (38) au moins dans la zone située à l'arrière par rapport au sens de marche (A).

4. Dispositif selon l'une quelconque des revendications 1 à 3, **caractérisé en ce que** la vis sans fin transporteuse (13) est logée de façon à pouvoir tourner à ses extrémités situées transversalement au sens de marche (A) et **en ce que** le corps d'arbre (29) portant les spires de vis sans fin présente une réduction de sa section transversale à l'extrémité d'éjection (37).

5. Dispositif selon l'une quelconque des revendications 1 à 4, **caractérisé en ce que** des âmes de guidage (34) sont disposées à l'intérieur de l'élargissement (33) en forme de dôme du corps d'enveloppe (23).

6. Dispositif selon la revendication 5, **caractérisé en ce que** plusieurs âmes de guidage (34) sont disposées les unes à côté des autres dans le sens de transport (B) de la vis sans fin transporteuse (13).

7. Dispositif selon la revendication 6, **caractérisé en ce que** la zone avant dans le sens de marche (A) de chacune des âmes de guidage (34) forme avec le sens de marche (A) un angle, mesuré depuis le sens de marche (A) dans le sens inverse du sens de transport (B) de la vis sans fin transporteuse (13), plus petit que la zone arrière dans le sens de marche (A).

8. Dispositif selon la revendication 7, **caractérisé en ce que** les âmes de guidage (34) dévient le flux de chaume d'environ 70°- 90° dans le sens de transport (B) de la vis sans fin transporteuse (13).

9. Dispositif selon l'une quelconque des revendications 5 à 8, **caractérisé en ce que** les âmes de guidage (34) sont maintenues sur le corps d'enveloppe (23) de façon à ce que leur position puisse être réglée.

10. Dispositif selon l'une quelconque des revendications 5 à 9, **caractérisé en ce que** les âmes de guidage (34) sont articulées d'un côté de façon à pivoter sur le corps d'enveloppe (23), l'autre extrémité pouvant être déplacée et bloquée dans une coulisse de guidage de forme courbe associée au corps d'enveloppe (23)

11. Dispositif selon l'une quelconque des revendications 1 à 10, **caractérisé en ce que** le dispositif de traitement (11) est maintenu dans un axe parallèle à celui de la vis sans fin transporteuse (13) et présente un sens de rotation (a) identique au sens de rotation (b) de ladite vis sans fin transporteuse (13).

12. Dispositif selon la revendication 11, **caractérisé en ce que** la vitesse de rotation de la vis sans fin transporteuse (13) est augmentée par rapport à la vitesse de rotation du dispositif de traitement (11).

13. Dispositif selon l'une quelconque des revendications 1 à 12, **caractérisé en ce que** la réduction de la section transversale du corps d'arbre (29) de la vis sans fin transporteuse (13) du transporteur transversal (12) est conformée de façon conique à l'extrémité d'éjection (37) du chaume.

14. Dispositif selon la revendication 13, **caractérisé en ce que** l'angle α de la zone conique du corps d'arbre (29) de la vis sans fin transporteuse (13) est de 5° - 15°, de préférence 10°.

15. Dispositif selon l'une quelconque des revendications 1 à 14, **caractérisé en ce que** le transporteur transversal (12) peut être enlevé du dispositif (1) par l'intermédiaire de fermetures à libérer.

16. Dispositif selon l'une quelconque des revendications 1 à 15, **caractérisé en ce que** l'on peut faire pivoter ou déplacer le transporteur transversal (12) dans une position de repos n'entravant pas le déroulement de la fauche et du traitement du dispositif (1).
